# EUROPEAN PATENT APPLICATION

(11) **EP 4 538 615 A1**
(43) Date of publication of application: **16.04.2025**
(21) Application number: 23202465.3
(22) Date of filing: 09.10.2023
(51) Int. Cl.: F24S 25/16, H02S 20/23

(54) **FOOT MEMBERS AND SYSTEM FOR FASTENING SOLAR PANELS**

(71) Applicant: Weland Stål AB, 523 90 Ulricehamn (SE)
(72) Inventor: SJÖBERG, Alexander, 554 53 Jönköping (SE)
(74) Representative: Bergenstråhle & Partners AB

(57) **Abstract**

First and second foot members (10, 20) and a system 1, arranged for fastening solar panels (100) to a substrate (150). The system (1) comprises a C-shaped support rail (80) which is arranged for fixed connection to a fixation bracket (60), first and second foot members (10, 20) which each are arranged with at least one flange (13, 23) for engagement with the rail (80) and at least two clamping brackets (50). Each clamping bracket (50) is arranged for clamping a solar panel (100) between the clamping bracket (50) and the first and/or the second foot member (10, 20).

## Description

### Technical field

The present invention relates to foot members arranged for supporting solar panels in a mounted position on a support rail and a system arranged for fastening solar panels on a roof, on a rack or the like.

### Background art

It is well known to mount framed solar panels on flat or low-sloping roofs, sloping roofs and on special racks mounted on poles at solar panel parks etc. Depending on whether the solar panels are to be mounted on a flat roof, a low-sloping roof, a sloping roof or a rack, unique fastening connections are used for each application, wherein a lot of different parts need to be produced and kept in stock at a producer/supplier of fastening systems for solar panels. For example, when mounting framed solar panels to a sloping roof on for example a residential building or a villa, the solar panels may be clamped by a plurality of clamping brackets which are screwed to a support rail, and by that clamping the solar panels to the support rails. The support rails are in turn fixed to the roof by different kinds of fixation brackets which are fixed to the roof. One example of such system is shown in EP 3 364 124 B1, where a clamping device is arranged to be coupled to a support rail in a releasable manner. A drawback with this solution is that it only suits a solution for direct clamping of the solar panel to the support rail, which doesn't work with all applications discussed above. Further, if the support rail is mounted along a sloping roof, the clamping device might slide along the rail before it is securely mounted to the rail, which is a drawback since it is convenient to position the holders/clamping devices in approximate position on the rails for a fast and proper mounting of the solar panels. Typically, when mounting solar panels to a rail, the clamping device are first approximately positioned, to then be fixed to the rail when the solar panel is mounted, why a flexible, but still a possibility to approximately position the holders/clamping devices is to prefer.

For mounting framed solar panels to a flat or low-sloping roofs, special support frames are be used for applying an angle of the solar panel relative the flat roof. For all roofs, of course the orientation of the solar panels is considered, and for flat or low-sloping roofs, typical orientations are that all panels are directed/angled towards south or that every other row of solar panels are directed towards east and the other towards west. Known solutions use a lot of different and specialized brackets/fastening means for each situation/application, why the producers have to produce and store a lot of different brackets etc. to be able to deliver to all kinds of solutions, which is both costly and not particularly friendly for the environment.

Thus, there is a need of foot members and a system which reduces the number of details and yet fits most of the solar panel applications on the market.

### Summary of invention

Objects of the present invention are to provide support members and a system which solves the above-described problems, according to the independent claims.

According to an aspect, a first foot member arranged for supporting solar panels in a mounted position on a support rail, is disclosed. The first foot member comprises a first end, which comprises a first support part which in a mounted position of the first foot member on the support rail, rests on an upper surface of the support rail, wherein first support part is arranged for fixed connection to the support rail. The first foot member further comprises a second end, which is arranged opposite the first end, and which comprises a second support part. The latter is arranged for supporting a solar panel and further arranged for fixed connection with a clamping bracket, for clamping a solar panel between the clamping bracket and the second support part of the first foot member. The first foot member also comprises at least one tongue, which protrudes from the first support part, in a direction away from the second end of the first foot member. The at least one tongue is arranged for engagement with the support rail by being introducible in a slot in an upper surface of the support rail. The first end and the second end of the first foot member is connected to each other by a mid-section, with an extension which more or less sets the height of the first foot member.

Such a first foot member fits both known solar panel systems as well as the inventive solar panel system presented in this application, for fastening solar panels to support rails used at different applications for solar panels, for example sloping roofs, flat roofs, low-sloping roofs, solar panel parks, etc. and further, it may be used for directing solar panels to one direction or for directing solar panels in two opposing directions. Further, the tongue enables an approximate positioning of the first foot member on the rail without the risk of falling off the rail before the first foot member is fixedly fastened to the support rail. This is convenient and enables a quick and effective mounting of solar panels on the rails, which are fixed to the roof/substrate. Known solutions are not flexible in that way and are designed for one single application only, which is negative for both economic and environmental reasons.

According to an embodiment, the at least one tongue has a substantially mating shape with an interior space (i.e., cross-section) of the support rail. This means that the tongue engages with the interior (sides and/or top parts) of the rail, wherein the tongue prevents the first foot member from leaving/falling out from the interior, when introduced into the rail. The mating shape does not need to exactly mate the interior but at least in such manner that it in some manner locks/prevents a lifting or releasing the first foot member from the rail. The shape is further designed in such manner that the tongue may be introduced into the slot when the first foot member is turned about 90 degrees relative the rail. This enables a releasable locking function of the first foot member.

According to an embodiment, the at least one tongue has a T-shape with a neck adjacent to the first support part and a transverse cross piece extending from the neck. This design substantially corresponds to the cross-section of the C-shaped support rail, wherein the above described advantages are achieved. In the mounted position of the first foot member on the rail, the tongue is arranged as an upside down T in the interior of the rail, wherein the cross piece of the "T" prevents the first foot member from leaving the rail in an opposite direction relative the insertion direction of the tongue into the slot of the rail.

According to an embodiment, the first support part of the first foot member comprises elongate through holes, arranged for receiving fastening means, for fixed connection of the first foot member to the support rail. By being elongate, the holes provide a flexibility of the positioning of the first foot member on the rail, i.e., to be able to fit a corresponding hole arranged in the upper side of the rail.

According to an embodiment, the second support part is angled relative the first support part. This means that the solar panel, when fastened to the second support part gets an angle relative to the rail, on which the first support part of the first foot member is fixedly arranged, in the mounted position. By that, the solar panel may be directed for best exposure of sunlight, even if the roof or substrate is flat or low-sloping.

According to an embodiment, the second support part of the second end comprises at least one flange, more preferred two flanges, which protrude(s) from the second support part in a direction away from the first end of the first foot member (i.e., upwards in the mounted position of the first foot member on the rail). The function of the flange is to act as a stop, which prevents the solar panel from slide down along the angled second support part, during mounting of the solar panel on the foot members. The stop also functions as a stop over time, not only during the mounting step, wherein, if a clamping bracket should by some reason loosen its grip around the edge of the solar panel, the flange prevents that the solar panel slides downwards along the foot member.

According to an aspect, a second foot member arranged for supporting solar panels in a mounted position on a support rail, is disclosed. The second foot member comprises two opposing shanks, wherein each shank comprises a first end, which comprises a first support part, which in a mounted position of the second foot member on the support rail, rests on an upper surface of the support rail, wherein the first support part is arranged for fixed connection to the support rail. The second foot member further comprises a second end, which is arranged opposite the first end, and which comprises a second support part. The latter is arranged for supporting a solar panel and further arranged for fixed connection with a clamping bracket, for clamping a solar panel between the clamping bracket and the second support part of the second foot member. Each shank also comprises at least one tongue, which protrudes from the first support part, in a direction away from the second end of the second foot member. The at least one tongue is arranged for engagement with the support rail by being introducible in a slot in an upper surface of the support rail. The first end and the second end of the second foot member is connected to each other by a mid-section, with an extension which more or less sets the height of the second foot member. The two opposing shanks are further joined together at the second end of each respective shank, and preferably, the second foot member is one part made of one single bent sheet metal part. Such a second foot member fits, in the same way as the first foot member, both known solar panel systems as well as the inventive solar panel system presented in this application, for fastening solar panels to support rails, used at different applications for solar panels, for example sloping roofs, flat roofs, low-sloping roofs, solar panel parks, etc., as discussed above.

According to an embodiment, the at least one tongue has a mating shape with an interior space of the support rail. The benefits of this are discussed above in relation to the first foot member.

According to an embodiment, the at least one tongue has a T-shape with a neck adjacent to the first support part and a transverse cross piece extending from the neck. The benefits of this are discussed above in relation to the first foot member.

According to an alternative embodiment, the at least one tongue of the first shank has a T-shape with a neck adjacent to the first support part and a transverse cross piece extending from the first neck, and the at least one tongue of the second shank is a tab. By this design, each shank of the second foot member engages with the slot of the support rail in the mounted position thereon, and after the second foot member is turned into position on the rail, the T-shaped tongue of one of the shanks prevents the second foot member from leaving the support rail, and both tongues are directed along the slot by the engagement between the tongues and the slot.

According to an embodiment, the first support part of the second foot member comprises elongate through holes arranged for receiving fastening means, for fixed connection of the second foot member to the support rail. The benefits of this are discussed above in relation to the first foot member.

According to an embodiment, the second support part of respective shank of the second foot member is angled relative the first support part of respective shank of the second foot member. Further, the second support part of respective shank is also angled relative the other, to provide that every other solar panel mounted thereon, are directed in opposite directions relative each other.

According to an aspect, a system arranged for fastening solar panels is disclosed. The system is arranged for fastening to fixation bracket, which in turn are arranged for fixed connection to a substrate, for example a roof. The system comprises a support rail, which comprises an upper side and an opposite lower side, wherein the support rail extends in a first direction. The support rail is arranged for fixed connection to the fixation bracket, wherein the lower side of the support rail faces the substrate in a mounted position. The support rail has a C-shaped cross-section with an interior space and at least one slot arranged on the upper side of the support rail. The system further comprises a first foot member according to any of the above described embodiments, and a second foot member according to any of the above described embodiments or an additional first foot member according to any of the above described embodiments. Further, the system comprises at least two clamping brackets, each arranged for clamping a solar panel between the clamping bracket and the first and/or the second foot member.

By such a system, with just a few parts - that is three types of foot members, one type of rail and clamping brackets - a very flexible and economic system for fastening of solar panels to different kinds of roof types are achieved. The parts may be combined to fit at least three different types of applications, namely sloping roofs with or without roof tiles, where solar panels are mounted on two support rails mounted transverse the slope of the roof; flat or low-sloping roofs, where solar panels are mounted on support foots which are mounted on support rails and where the solar panels are directed towards one direction or where the solar panels are directed towards two opposite directions.

According to an embodiment, the system comprises a plurality of support rails, a plurality of first foot members (low and high versions) and a plurality of clamping brackets. Such a system may preferably be used for a flat or low-sloping roof with all solar panels directed in one direction.

According to an embodiment, the system comprises a plurality of support rails, a plurality of first foot members, a plurality of second foot members and a plurality of clamping brackets. Such a system may preferably be used for a flat or low-sloping roof with all solar panels directed in two opposite directions.

### Brief description of drawings

The invention is now described, by way of example, with reference to the accompanying drawings, in which:
Fig. 1 shows a part of a sloping roof with roof tiles, where solar panels are mounted on two support rails mounted transverse the slope of the roof.
Fig. 2 shows a part of a flat or low-sloping roof, where solar panels are mounted on foot members which are mounted on support rails and where the solar panels are directed towards one direction.
Fig. 3 shows a part of a flat or low-sloping roof, where solar panels are mounted on two foot members which are mounted on support rails and where the solar panels are directed towards two opposite directions.
Figs. 4a-b show a first foot member in an isometric view and a side view, which first foot member is a low version of first foot member, arranged for supporting a solar panel and for fixation to a support rail.
Figs. 5a-b show a higher version of the first foot member in an isometric view and a side view, which first foot member is arranged for supporting a solar panel and for fixation to a support rail.
Figs. 6a-c show a second foot member in two isometric views and a side view, which second foot member is arranged for supporting a solar panel and for fixation to a support rail.
Figs. 7a-c show an alternative version of the second foot member in two isometric views and a side view, which alternative version of second foot member is arranged for supporting a solar panel and for fixation to a support rail.
Fig. 8a shows an isometric view of a low version of the first foot member mounted on a support rail and supporting a solar panel, and Fig. 8b shows the higher version of the first foot member mounted on a support rail and supporting a solar panel.
Fig. 8c shows an end view of the support rail 80 with the low version of the first foot member 10 fastened to it.
Fig. 8d shows an isometric view of a second foot member mounted on a support rail and supporting two solar panels.
Fig. 9a-b show zoomed views of an alternative clamping bracket for clamping two adjacent solar panels to a first foot member.

### Description of embodiments

In the following, a detailed description of foot members and a system for supporting and fastening solar panels, is disclosed in detail, in respect of embodiments and in reference to the accompanying drawings. All examples herein should be seen as part of general description and therefore possible to combine in any way in general terms.

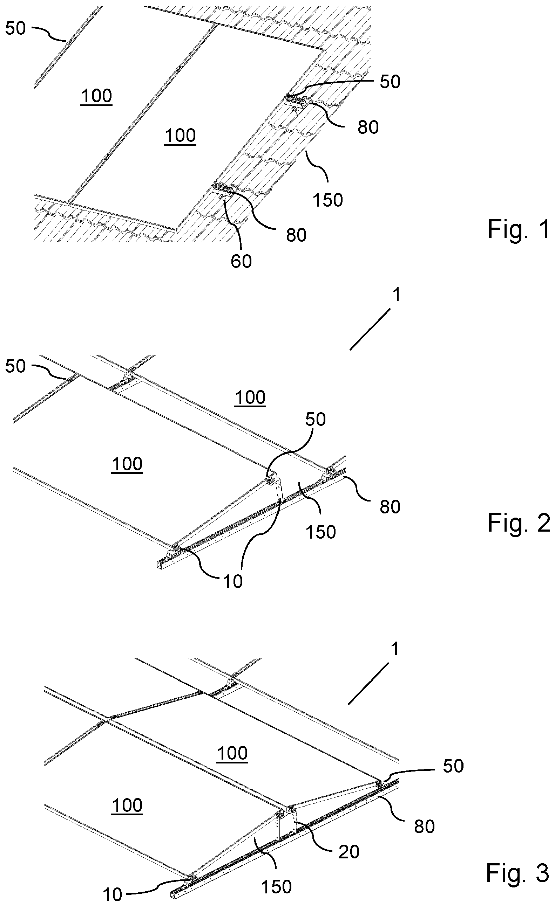

Fig. 1 shows a part of a sloping roof / substrate 150 on which roof tiles are arranged in a known way. Solar panels 100 are mounted on two support rails 80, which are mounted transverse the slope of the roof 150 and are fixed to fixation brackets 60. The fixation brackets 60 may be of different kinds depending on the roof construction and the fixation brackets 60 are fixed to the roof/roof construction/substrate 150. The fastening of the fixation brackets 60 to the roof 150 may be done in different ways, also depending on the application, for example by screws fixed to the roof construction. Each solar panel 100 is clamped towards the support rail 80 by a plurality of clamping brackets 50, which engages with the support rail 80 by means of screws or the like and which when tightened/screwed towards the support rail 80, clamps the solar panel 100 to the support rail 80. This kind of sloping roof normally has the support rails 80 mounted transverse the slope of the roof 150 and the clamping brackets 50 are mounted directly on the support rail 80. The clamping brackets 50 are in this example of at least two different versions, depending on if the clamping bracket 50 is arranged at an outer free edge of a solar panel 100 or between two solar panels 100, but the clamping function is the same.

Fig. 2 shows a system 1 arranged for fastening solar panels 100 to the substrate/roof 150. The figure shows a part of a flat or low-sloping roof 150 on which solar panels 100 are mounted by being mounted on supporting first foot members 10, which in turn are mounted on the support rails 80. The first foot members 10 are arranged to support the solar panels 100. The support rails 80 are fixed to the substrate/the roof 150 by some kind of fixation brackets (not shown) which may be of different kinds depending on the application. The solar panels 100 are directed towards one direction, for example south direction, to gain as much solar power as possible. The system 1 comprises two types of first foot members 10, one low version and one higher version, which is higher than the low version, wherein the solar panel 100 is inclined relative the substrate 150. As can be seen, the first foot members 10 are mounted "along" the support rail 80 and the support rails 80 in this type of flat or low-sloping roof 150 are mounted along the direction to which the solar panels 100 are directed, for example east-west. The clamping bracket 50 is mounted on top of each first foot member 10, and by tensioning for example a screw, which connects the clamping bracket 50 and first foot member 10, the solar panel 100 gets clamped to the first foot member 10. This will be explained more in detail below. The solar panels 100 are arranged in rows extending transverse the extension of the support rails 80, and a plurality of rows of solar panels 100 are arranged after each other along the extension of the support rails 80.

Fig. 3 shows an alternative system 1 arranged for fastening solar panels 100 to the substrate/roof 150, in the same way as explained above. The figure shows a part of a flat or low-sloping roof 150 on which the solar panels 100 are mounted for exposure in two opposite directions, typically east-west directions. The solar panels 100 are mounted on first foot members 10 and second foot members 20, which first and second foot members 10, 20 are mounted on the support rails 80. The first foot member 10 is the lower type of first foot member 10 (as explained above) and the second foot member 20 is higher than the first foot member 10, such that the solar panel 100 is inclined relative the roof/substrate 150. In the example, the second foot member 20 supports two adjacent solar panels 100, wherein the left side of the second foot member 20 is a mirror-copy of the right side, in order to support the highest part of the adjacent solar panels 100. The support rails 80 are fixed to the substrate/the roof 150 by some kind of fixation brackets 60 as explained above (not shown). The first and second foot members 10, 20 are mounted "along" the support rail 80 and the support rails 80 in this type of flat or low-sloping roof 150 are mounted along the directions (for example mounted in east-west direction) to which the solar panels 100 are directed. The clamping bracket 50 is mounted on top of each first foot member 10 and each second foot member 20, and by tensioning for example a screw, which connects the clamping bracket 50 and foot members 10, 20, the solar panel 100 gets clamped to the first foot member 10 and to the second foot member 20. This will be explained more in detail below. The solar panels 100 are arranged in rows extending transverse the extension of the support rails 80, and a plurality of rows of solar panels 100 are arranged after each other in opposite directions along the extension of the support rails 80.

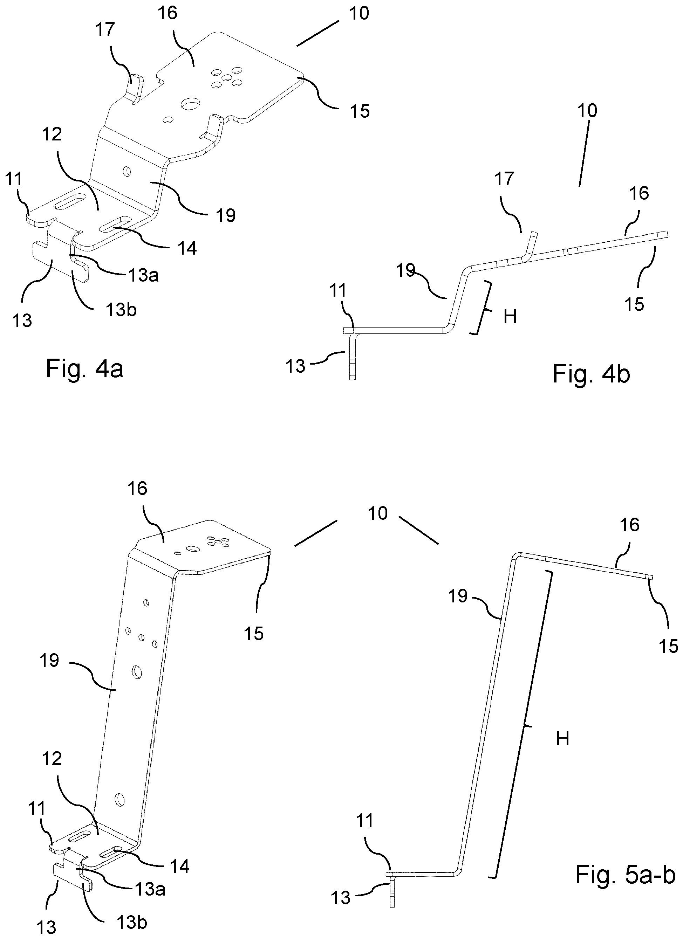

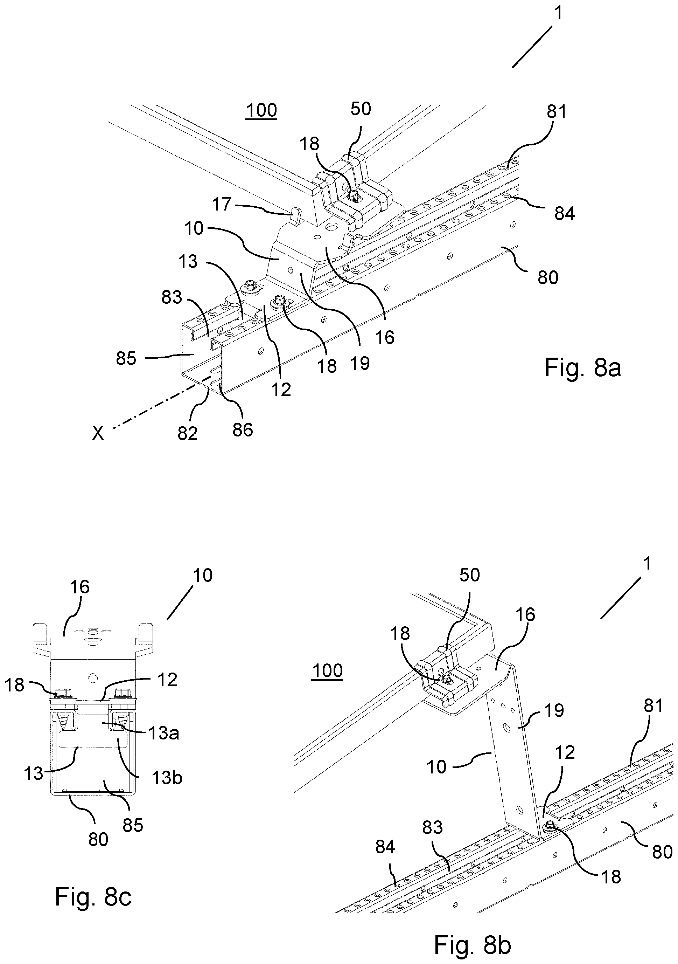

Figs. 4a shows the low version of the first foot member 10 in an isometric view and Fig. 4b shows a side view of the first foot member 10 of Fig. 4a. The first foot member 10 is preferably made of steel and is arranged for supporting a solar panel 100 in a mounted position on the support rail 80 and further arranged for fixation to the support rail 80. The first foot member 10 comprises a first end 11, which is the lowermost end in the mounted position on the rail 80, and the first end 11 comprises a first support part 12 in the form of a flat part, which in a mounted position of the first foot member 10 on the support rail 80 rests on an upper surface 81 of the support rail 80, see further Fig. 8a. Further, the first support part 12 is arranged for fixed connection to the support rail 80, by that it comprises elongate through holes 14 arranged for receiving fastening means (not visible), for fixed connection of the first foot member 10 to the support rail 80.

The first foot member 10 further comprises a second end 15, arranged opposite the first end 11, and which second end 15 comprises a second support part 16. The latter is arranged for supporting the solar panel 100 and for fixed connection with the clamping bracket 50, for clamping the solar panel 100 between the clamping bracket 50 and the second support part 16 of the first foot member 10. This will be further explained in relation to Fig. 8a.

The first foot member 10 comprises at least one tongue 13 which protrudes from the first support part 12 of the first end 11. The at least one tongue 13 protrudes from the first support part 12 in a direction away from the second end 15 of the first foot member 10, i.e., downwards in the mounted position on the rail 80. The at least one tongue 13 is arranged for engagement with the support rail 80 by being introducible in an elongate slot 83 of the support rail 80, see further Fig. 8a. The tongue 13, preferably has a T-shape with a neck 13a adjacent to the first support part 12 and a transverse cross piece 13b which extends from the neck 13a. The tongue 13 may be "twisted" into the elongate slot 83 of the rail 80 such that the cross piece 13b engages with parts of the rail 80 on respective sides of the slot 83 (see below).

A mid-section 19 of the first foot member 10 connects the first end 11 and the second end 15 and has an extension H, which sets the height of the first foot member 10. The second support part 15 is preferably angled relative the first support part 11 to cause an angle relative the support rail 80, when fixedly mounted thereon. This, of course to angle the solar panel 100 for exposure of sunlight in the desired direction. The second support part 16 of the second end 15 comprises at least one flange 17, preferably two flanges 17, which protrudes from the second support part 16 in direction away from the first end 11 of the first foot member 10, i.e., upwards in the mounted position of the first foot member 10 on the rail 80. The function of the flanges 17 are to act as a stop which prevents the solar panel 100 from slide down along the angled second support part 16. This will be further explained in relation to Fig. 8a.

Figs. 5a-b show the higher version (compared to the lower version) of the first foot member 10 in an isometric view and a side view, and the high version of the first foot member 10 is also arranged for supporting a solar panel 100 and for fixation to a support rail 80 in the same way as the lower version of the first foot member 10. The higher version of the first foot member 10 is preferably also made of steel and has the same details and functions as the lower version which is described above, except the flanges 17. This means that it comprises the first end 11 (which is the lower end in the mounted position on the rail) which comprises the first support part 12. The first support part 12 comprises elongate through holes 14 arranged for receiving fastening means (not visible), for fixed connection of the high version of the first foot member 10 to the support rail 80. Further, it comprises a second end 15, opposite the first end 11, which second end 15 comprises the second support part 16, arranged for supporting a solar panel 100 and for fixed connection with the clamping bracket 50. This, by that both versions (high/low) of the first foot member 10 comprise a plurality of holes at the second support part 16, arranged for receiving a fastening means of some kind, like a screw or the like.

Also, the high version of the first foot member 10 comprises the tongue 13 which protrudes from the first support part 12 of the first end 11 and which is arranged for engagement with the support rail 80 by being introducible in the elongate slot 83 of the support rail 80. In a similar way as the lower version of the first foot member 10, the tongue 13 preferably has a T-shape with a neck 13a and a transverse cross piece 13b. The mid-section 19 of the high version first foot member 10 connects the first end 11 and the second end 15 and has an extension H, which sets the height of the first foot member. The extension H of the mid-section of the higher version is longer than the extension H of the lower version of the first foot member 10. The second support part 15 is preferably angled relative the first support part 11 to cause an angle relative the support rail 80, when fixedly mounted thereon, to angle the solar panel 100 for exposure of sunlight in the desired direction. The low and the high version of the first foot member 10 are used in pairs (one low + one high) for supporting one side of a solar panel 100 in the system 1 for a flat or low-sloping roof as shown in Fig. 2, such that the solar panel 100 is angled relative the substrate. This will be further explained in connection to Figs. 8a-b.

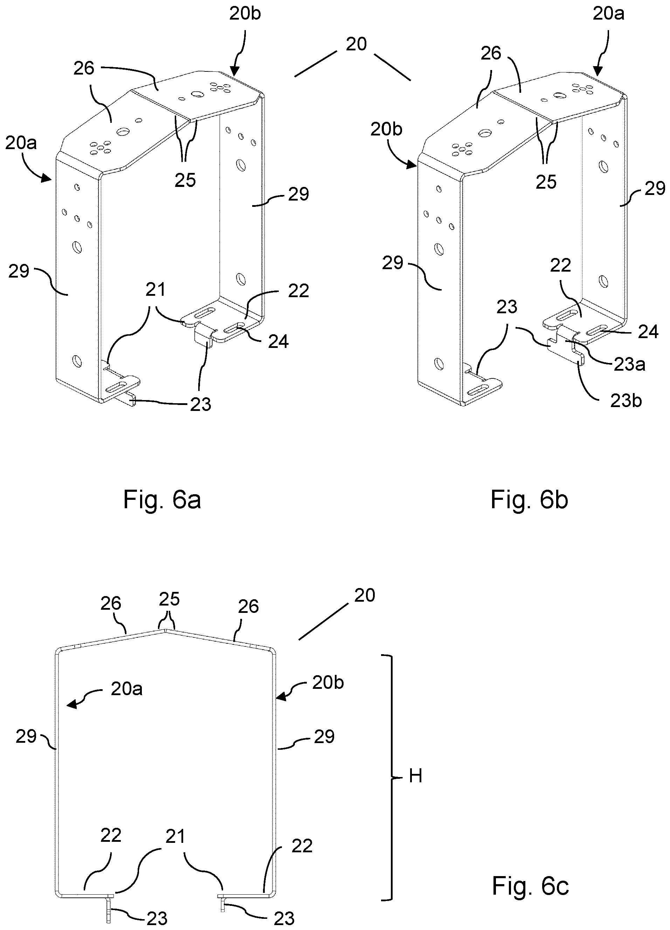

Figs. 6a-c show a second foot member 20 in two isometric views (right/left view) and a side view. The second foot member 20 is arranged for supporting two adjacent solar panels 100 and for fastening to a support rail 80. The second foot member 20 is used in the system shown in Fig. 3, where the solar panels 100 are mounted for exposure in two opposite directions, typically east-west directions on a flat or low-sloping roof 150. Therefore, the second foot member 20 is arranged to support the uppermost part of two adjacent solar panels 100 (in the mounted position), which are directed in opposite directions.

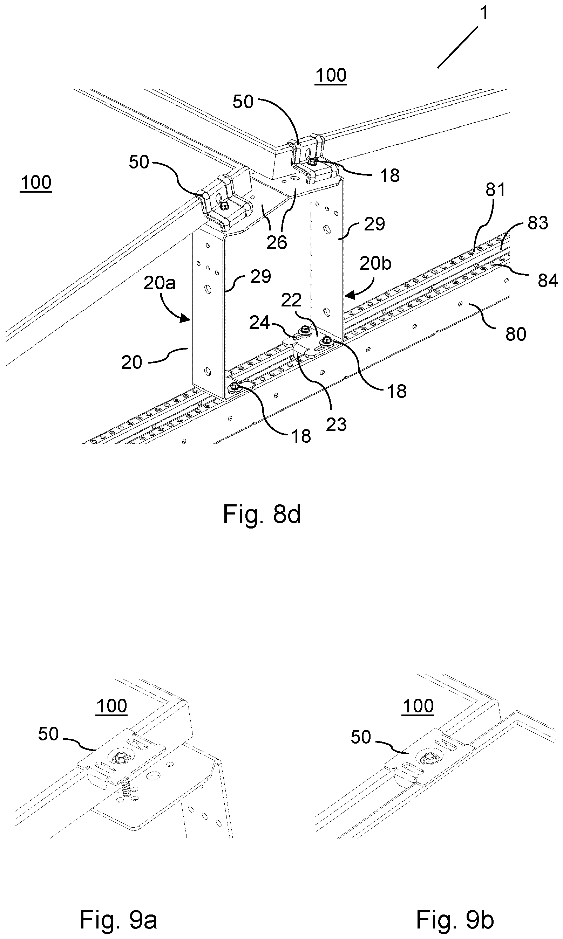

The second foot member 20 is preferably made of steel, and comprises two opposing shanks 20a, 20b, which more or less are mirror-copies of each other. Each shank 20a, 20b comprises a first end 21, which comprises a first support part 22, which in a mounted position of the second foot member 20 on the support rail 80 rests on an upper surface 81 of the support rail 80, wherein the first support part 22 is arranged for fixed connection to the support rail 80. The latter by that the first support part 22 comprises elongate through holes 24, which are arranged for receiving fastening means, for example a screw or the like. A second end 25 of each shank 20a, 20b is arranged opposite the first end 21 and comprises a second support part 26, which is arranged for fixed connection with the clamping bracket 50, in the same way as for the first foot member 10 as described above. Similar with the first foot member 10, each shank 20a, 20b the second foot member 20 comprises a tongue 23, which is arranged at the first support part 22 of the first end 21 of the second foot member 20. The tongue 23 protrudes from the first support part 22 in a direction away from the second end 25 of the second foot member 20, i.e., downwards in the mounted position on the rail 80. The tongue 23 is arranged for engagement with the support rail 80 by being introducible in an elongate slot 83 of the support rail 80, see further Figs. 8c-d. The tongue 23 of one shank 20a of the two opposite shanks 20a, 20b of the second foot member 20 preferably has the T-shape with a neck 23a adjacent to the first support part 22 and a transverse cross piece 23b extending from the neck 23a. The tongue 23 of the other shank 20b of the two opposite shanks 20a, 20b does not comprise the transverse cross piece and is instead a tab, because otherwise it would not be possible to introduce the T-shaped tongue of the other shank in the slot 83 of the rail 80. See further Fig. 8d.

Each shank 20a, 20b of the second foot member 20 further comprises a mid-section 29, which connects the first end 21 and the second end 25 of each shank 20a, 20b. The mid-section has an extension H which determines the height of the second foot member 20. The two opposite shanks 20a, 20b are joined together at the second end 25 of each respective shank 20a, 20b. Preferably, the two shanks 20a, 20b are made of one single bent steel sheet metal, wherein the second foot member 20 is produced as one piece. In Figs. 6a-c, this version of the second foot member 20 has its first support parts 22 of respective shank 20a, 20b bent inwards, in direction towards the opposite shank 20a, 20b.

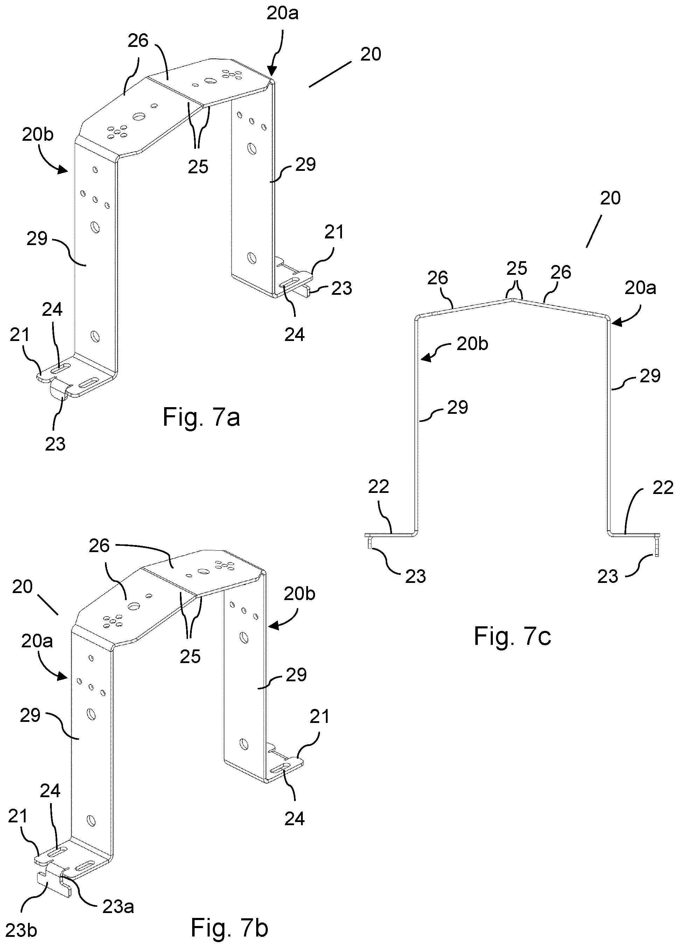

Figs. 7a-c show an alternative second foot member 20 in two isometric views (right/left) and a side view. The only difference of this alternative version of second foot member 20 is that each first support parts 22 of respective shank 20a, 20b is bent outwards, in direction away from the opposite shank 20a, 20b. This might be suitable for an easier fastening to the support rail 80, since the elongate screw holes 24 are easier to access.

Fig. 8a shows an isometric view of the lower version of the first foot member 10 mounted on a support rail 80 and supporting a lower part of a solar panel 100 and Fig. 8b shows the higher version of the first foot member 10 mounted on a support rail 80 and supporting an upper part of the solar panel 100. As mentioned above, the low and high version of the first support foot 10 are used in pairs along one side of the solar panel 100 (i.e., gripping a frame of the solar panel) in the system 1 for a flat or low-sloping roof as shown in Fig. 2, such that the solar panel 100 is angled relative the substrate and directed to one direction, typically the south or west direction.

The support rail 80 comprises an upper side 81 and an opposite lower side 82 and has an extension in a first direction X. The support rail 80 is arranged for fastening to some kind of fixation bracket 60 (not visible), wherein the lower side 82 of the support rail 80 faces the roof/substrate 150. The support rail 80 has a C-shaped cross-section with an interior space 85, which comprises at least one, preferably elongate, slot 83 arranged on the upper side 81 of the support rail 80. Typically, the lower side 82 has a plurality of through holes 86 arranged for receiving fastening means for fixed connection of the rail 80 to the fixation bracket 60 (one example is shown in Fig. 1). The upper side 81 also comprises a plurality of through holes 84 arranged for receiving fastening means 18, for fixed connection of the first and second foot members 10, 20 to the rail 80 and/or for fixation of clamping brackets 50 to the rail. For example, in the application of a sloping roof 150 shown in Fig. 1, the clamping brackets 50 are mounted directly to the support rail 80 by that the fastening means 18 is connected either directly to the support rail 80 or an anvil arranged into the interior space 85 of the rail 80. By tightening/screwing the fastening means (i.e. screw) to the rail 80 or the anvil, the clamping bracket 50 gets fixed to the rail 80 at the same time as the solar panel 100 is fastened.

When the fixation brackets and the support rails 80 are fixedly mounted on the substrate 150, the low and the high first foot members 10 are positioned on the support rail 80 in an expected position along the rail 80, for supporting a side of a solar panel 100. This is done by introducing the tongue 13 of the respective first foot members 10 in the slot 83 of the support rail 80, such that the tongue 13 substantially aligns with the elongate slot 83. This means that the first foot member 10 at this stage is angled relative the extension X of the rail 80, and then the first foot member 10 is rotated a quarter turn such that it aligns with the rail 80, and the first support part 12 rests on the upper side 81 of the rail 80. By that, the tongue 13 is arranged into the interior space 85 of the rail 80 and the first foot member is prevented from leaving the interior space 85 of the rail 80, since the tongue 13 engages with the rail 80. This also means that the first foot members 10 may be positioned in their approximately positions along the rail without falling of the rail 80. If the roof 150 is sloped and the rails 80 are arranged in direction along the slope, the tongue 13 further prevents the first foot member so slide along the rail 80, since the tongue 13 engages with the interior space 85 of the rail 80. The first support part 12 together with the design of the first foot member 10 (concerning its center of gravity) also contributes to the engagement of the first foot member 10 with the rail 80.

The next step after the lower and higher first foot members 10 are positioned on the rails 80, the solar panel 100 is positioned on the first foot members 10, wherein the flanges 17 of the lower version of first foot member 10, act as a stop, which prevents the solar panel 100 from sliding downwards along the inclined first and second support parts 12, 16 of the low respective high first foot member 10. If the position of the foot members 10 must be adjusted along the rail 80, it is easy to do by sliding the foot member 10 along the rail before fixing it to the rail 80 by the fixation means 18. The solar panel 100 is normally mounted on the first foot member 10 such as it rests on one half of the respective support part 12, 16, wherein another solar panel 100 may be arranged adjacent to the mounted solar panel 100. In Figs. 8a-b, the solar panel 100 is an outermost solar panel, and the clamping bracket 50 is of the type for clamping an edge/frame of the solar panel 100 with no other solar panel 100 adjacent to that edge of the solar panel. For solar panels positioned adjacent to another solar panel, another type of clamping bracket 50 is used (visible for example in Figs. 1-3, and Figs. 9a-b), but which still fits the foot members 10, 20. To fasten the solar panel 100 in its wanted position, one clamping bracket 50 is screwed to the respective first foot member 10, such that it clamps an edge of the frame of the solar panel 100 and when tightening the screws 18 by screwing them into holes arranged at the respective first and second support part 12, 16 of the low and high first foot member 10, the solar panel 100 gets fixedly connected to the first foot members 10. The angle of the solar panel 100 relative the roof/substrate 150 depends on the height H of mid-section 19 of the low first foot member 10 and the height H of mid-section 19 of the high first foot member 10.

Fig. 8c shows an end view of the support rail 80 with the low version of the first foot member 10 fixedly screwed to it by two fastening means 18 in the form of two screws 18. The transverse cross piece 13b of the tongue 13 of the first foot member 10 is inserted into the interior space 85 of the rail 80 and the neck 13a is arranged in the slot 83 of the rail 80. By that, the first foot member 10 is prevented from leaving the rail upwards.

Fig. 8d shows an isometric view of the second foot member 20 when mounted on the support rail 80 and supporting a solar panel 100 in a system 1 as shown in Fig. 3, the "two-directed" (east-west) system. In such a system 1, the lower type of first foot member 10 is used as support of the lower end of the solar panel 100, as shown in Fig. 8a, and the second foot member 20 is used as a support of two upper parts of two adjacent solar panels 100, as can be seen in Fig. 8d. When mounting the second foot member 20 on the rail 80, the second foot member 20 is angled relative the extension of the rail 80, such that the shank 20a with the T-shaped shank 23 is possible to introduce in the elongate slot 83 of the rail 80. When the T-shaped flange 23 is inside the rail 80, in the interior space 85, the other shank 20b, which comprises the flange 23 with the tab (see Fig. 6a, and Fig. 7a), is lowered such that the tab 23b is introduced into the slot 23 of the rail 80. Now it is possible to slide the second foot member 20 into an approximately correct position, to be able to support two adjacent, and opposite directed, solar panels 100. The solar panels 100 are positioned in the same way as described above, such that the lowermost edge of the solar panels 100 stops against the flange/flanges 17of the low first foot member 10. If necessary, the second foot member is slid into correct position and fastened to the rail by the fastening means 18, which are screwed through the holes 24 of the first support surface 22 and further into the holes 84 of the rail 80. The clamping brackets 50 are screwed to the second support surface 26 of the respective shank 20a, 20b of the second foot member 20 in the same way as described above, for clamping the solar panel 100 towards the first foot member 10 and to the second foot member 20.

Fig. 9a-b show zoomed views of an alternative clamping bracket 50 for clamping two adjacent solar panels 100 to a first foot member 10, which in the figure is the higher version of the first foot member 10. The same type of alternative clamping bracket 50 may be used in combination with all versions of foot members 10, 20 as well as directly with the support rail 80.

By the above described system 1, with just a few parts, more precise, by three types of foot members, one type of rail and clamping brackets, a very flexible and economic system for fixing solar panels to different kinds of roof types are achieved. The parts may be combined to fit at least three different types of applications, namely sloping roofs with or without roof tiles, where solar panels are mounted on two support rails mounted transverse the slope of the roof; flat or low-sloping roof, where solar panels are mounted on support foots which are mounted on support rails and where the solar panels are directed towards one direction or where the solar panels are directed towards two opposite directions.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. A first foot member (10) arranged for supporting solar panels (100) in a mounted position on a support rail (80), wherein the first foot member (10) comprises:
- a first end (11) comprising a first support part (12), which in a mounted position of the first foot member (10) on the support rail (80) rests on an upper surface (81) of the support rail (80), wherein first support part (12) is arranged for fixed connection to the support rail (80),
- a second end (15) arranged opposite the first end (11), the second end (15) comprising a second support part (16), which is arranged for fixed connection with a clamping bracket (50), for clamping a solar panel (100) between the clamping bracket (50) and the second support part (16) of the first foot member (10),
- at least one tongue (13) protruding from the first support part (12) in a direction away from the second end (15) of the first foot member (10), wherein the at least one tongue (13) is arranged for engagement with the support rail (80) by being introducible in a slot (83) in an upper surface (81) of the support rail (80),
- a mid-section (19) connecting the first end (11) and the second end (15) of the first foot member (10).

2. First foot member (10) according to claim 1, wherein the at least one tongue (13) has a mating shape with an interior space (85) of the support rail (80).

3. First foot member (10) according to claim 2, wherein the at least one tongue (13) has a T-shape with a neck (13a) adjacent to the first support part (12) and a transverse cross piece (13b) extending from the neck (13a).

4. First foot member (10) according to any of the preceding claims, wherein the first support part (12) comprises elongate through holes (14) arranged for receiving fastening means, for fixed connection of the first foot member (10) to the support rail (80).

5. First foot member (10) according to any of the preceding claims, wherein the second support part (15) is angled relative the first support part (11).

6. First foot member (10) according to any of the preceding claims, wherein the second support part (16) of the second end (15) comprises at least one flange (17), which protrudes from the second support part (16) in a direction away from the first end (11) of the first foot member (10).

7. A second foot member (20), arranged for supporting solar panels (100) in a mounted position on a support rail (80), wherein the second foot member (20) comprises two opposing shanks (20a, 20b), wherein each shank (20a, 20b) comprises:
- a first end (21) comprising a first support part (22), which in a mounted position of the second foot member (20) on the support rail (80) rests on an upper surface (81) of the support rail (80), wherein the first support part (22) is arranged for fixed connection to the support rail (80),
- a second end (25) arranged opposite the first end (21), the second end (25) comprising a second support part (26), which is arranged for fixed connection with a clamping bracket (50), for clamping a solar panel (100) between the clamping bracket (50) and the second support part (26) of the second foot member (20),
- at least one tongue (23) protruding from the first support part (22) in a direction away from the second end (25) of the second foot member (20), wherein the at least one tongue (23) is arranged for engagement with the support rail (80) by being introducible in a slot (83) in an upper surface (81) of the support rail (80),
- a mid-section (29) connecting the first end (21) and the second end (25) of the second foot member (20),
wherein the two opposing shanks (20a, 20b) are joined together at the second end (25) of each respective shank (20a, 20b).

8. Second foot member (20) according to claim 7, wherein the at least one tongue (23) has a mating shape with an interior space (85) of the support rail (80).

9. Second foot member (20) according to claim 8, wherein the at least one tongue (23) has a T-shape with a neck (23a) adjacent to the first support part (22) and a transverse cross piece (23b) extending from the neck (23a).

10. Second foot member (20) according to claim 7, wherein the at least one tongue (23) of the first shank (20a) has a T-shape with a neck (23a) adjacent to the first support part (22) and a transverse cross piece (23b) extending from the first neck (23a) and the at least one tongue (23) of the second shank (20b) is a tab.

11. Second foot member (20) according to any of claims 7 - 10, wherein the first support part (22) comprises elongate through holes (24) arranged for receiving fastening means, for fixed connection of the second foot member (20) to the support rail (80).

12. Second foot member (20) according to any of claims 7 - 11, wherein the second support part (25) of respective shank (20a, 20b) of the second foot member (20) is angled relative the first support part (22) of respective shank (20a, 20b) of the second foot member (20).

13. A system (1) arranged for fastening solar panels (100) to a fixation bracket (60), the fixation bracket (60) being arranged for fixed connection to a substrate (150), the system (1) comprises:
- a support rail (80) comprising an upper side (81) and an opposite lower side (82), wherein the support rail (80) extends in a first direction (X) and is arranged for fixed connection to the fixation bracket (60), wherein the lower side (82) of the support rail (80) faces the substrate (150) in a mounted position, wherein the support rail (80) has a C-shaped cross-section with an interior space (85) and at least one slot (83) arranged on the upper side (81) of the support rail (80),
- a first foot member (10) according to any of claims 1 - 6,
- a second foot member (20) according to any of claims 7 - 12 or an additional first foot member (10) according to any of claims 1 - 6,
- two clamping brackets (50), each arranged for clamping a solar panel (100) between the clamping bracket (50) and the first and/or the second foot member (10, 20).

14. System according to claim 13, comprising a plurality of support rails (80), a plurality of first foot members (10) and a plurality of clamping brackets (50).

15. System according to claim 13, comprising a plurality of support rails (80), a plurality of first foot members (10), a plurality of second foot members (20) and a plurality of clamping brackets (50).
